(19) Europäisches Patentamt / European Patent Office / Office européen des brevets

(11) **EP 2 325 966 B1**

(12) **EUROPEAN PATENT SPECIFICATION**

(45) Date of publication and mention of the grant of the patent:
**30.03.2022 Bulletin 2022/13**

(21) Application number: **09809611.8**

(22) Date of filing: **28.08.2009**

(51) International Patent Classification (IPC):
*H02H 3/40* *(2006.01)*       *H02H 3/02* *(2006.01)*

(52) Cooperative Patent Classification (CPC):
**H02H 3/40**

(86) International application number:
**PCT/JP2009/004244**

(87) International publication number:
**WO 2010/023956 (04.03.2010 Gazette 2010/09)**

(54) **SHORT-CIRCUIT DISTANCE RELAY**

KURZSCHLUSS-DISTANZRELAIS

RELAIS DE COURT-CIRCUIT À DISTANCE

(84) Designated Contracting States:
**AT BE BG CH CY CZ DE DK EE ES FI FR GB GR HR HU IE IS IT LI LT LU LV MC MK MT NL NO PL PT RO SE SI SK SM TR**

(30) Priority: **29.08.2008   JP 2008222622**

(43) Date of publication of application:
**25.05.2011   Bulletin 2011/21**

(73) Proprietor: **Kabushiki Kaisha Toshiba**
**Minato-ku**
**Tokyo 105-8001 (JP)**

(72) Inventors:
• **HORI, Masao**
**Kawasaki-shi**
**Kanagawa 210-0024 (JP)**

• **SAITA, Yutaka**
**Fuchu-shi**
**Tokyo 183-8511 (JP)**
• **INUKAI, Michihiko**
**Tokyo 105-8001 (JP)**

(74) Representative: **Hoffmann Eitle**
**Patent- und Rechtsanwälte PartmbB**
**Arabellastraße 30**
**81925 München (DE)**

(56) References cited:
**JP-A- 3 052 514        JP-A- 5 161 243**
**JP-A- H09 215 177      JP-A- 2002 027 663**
**US-A1- 2003 151 867    US-B1- 6 459 960**

**Description**

<u>FIELD</u>

This invention relates to a digital short-circuit distance relay, and more particularly, relates to a digital short-circuit distance relay which is directed to preventing misjudgment and unnecessary operation due to overreach.

<u>BACKGROUND</u>

In the field of electric power system protection, short-circuit distance relays are widely used for detecting a short-circuit fault in a power transmission line to be protected. The "short-circuit distance relays" calculates an impedance value as the distance from the relaying point to the fault point, and performs fault selection depending on the calculated impedance value to output an opening command to a circuit breaker.

Here, a conventional example of a digital short-circuit distance relay is explained. In the short-circuit distance relay, a direction element and a short-circuit distance relay element are provided, each of which inputs voltage and current from a three-phase AC power system. The "direction element" is an element which identifies the direction of a fault based on voltage and current input from the system, and the "short-circuit distance relay element" is a reactance element which calculates an impedance value as the electrical distance from the relaying point to the fault point based on voltage and current input from the system.

Further, the short-circuit distance relay element has a plurality of distance elements such as a first stage element, second stage element. Each distance element has a setting value of impedance. The short-circuit distance relay element compares a setting impedance value and a calculated impedance value, and make an operation judgment when a fault has occurred based on a result of the comparison to output an opening command to a circuit breaker depending on the operation judgment.

In the short-circuit distance relay as mentioned above, on condition that the direction element has operated, when the calculated impedance value by the short-circuit distance relay element is equal to or less than the setting impedance value of a distance element, the distance element judges that the calculated impedance value has come in the operation range of itself, and outputs an opening command to a circuit breaker. As operations to be judged by the distance elements, an instantaneous interruption is judged by the first stage element, and a time limit interruption is judged by the second stage element and subsequent stage elements.

The short-circuit distance relay mentioned above, in a conventional manner, was mainly applied to back-up protection for backup of main protection. However, recently, it is desired to enhance the reliability of system protection and the degree of freedom of system operation in electric power system protection, short-circuit distance relay also is expected to be used for main protection. Therefore, regarding enhance of the accuracy of short-circuit distance relay, not only enhance of accuracy in the measurement of electrical distance but also countermeasure to overreach are regarded as important.

Here, "overreach" will be explained. A short-circuit distance relay of a phase where a fault occurs, can accuracy determine an impedance value as the electrical distance from the relaying point to the fault point except load current and resistance of the fault point and the like. On the other hand, in a short-circuit distance relay of a normal phase except the fault phase, it is known that an impedance value calculated by the relay, shows an overreach or urderreach to the setting impedance value.

Advance phase overreach when a short-circuit fault occurs, is typical for as overreach the impedance value of which is more than twice of the fault phase (See Non-Patent Document 1). More specifically, when an impedance value measured by a short-circuit distance relay of the fault phase enters the operation range of the second stage element, although the operation essentially should be judged as a time limit interruption, as a result of occurrence of an overreach phenomenon in an advance phase, the impedance value, the impedance value can enter the operation range of the first stage element.

In such a case, the first stage element judges an instantaneous interruption to perform an unnecessary operation, although it should be in non-operation. As mentioned above, since the operation output of the first stage element is an instantaneous operation, it is very important to prevent an unnecessary operation. Therefore, various countermeasures to overreach are taken in short-circuit distance relays so far.

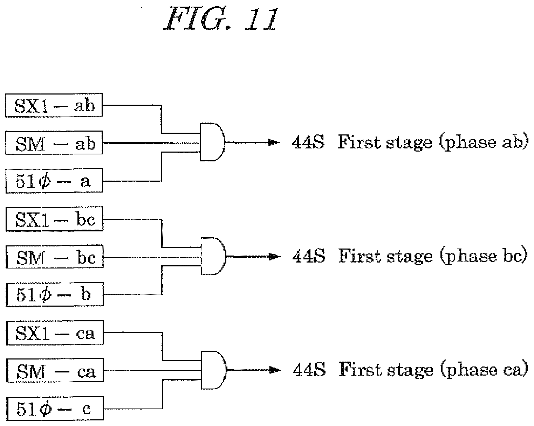

Specifically, as a countermeasure to overreach, the following techniques are known. First, in the method shown in Fig. 11, to the first stage elements as distance elements SXI-ab, SX1-bc and SX1-ca, and the direction elements SM-ab, SM-bc and SM-ca, respectively, over current elements 51φ-a, 51φ-b and 51φ-c are connected to configure an AND circuit. With this method, use of the operation condition of the over current relay can prevent output of an unnecessary operation in the first stage element SX1 in an advance phase when a fault occurs.

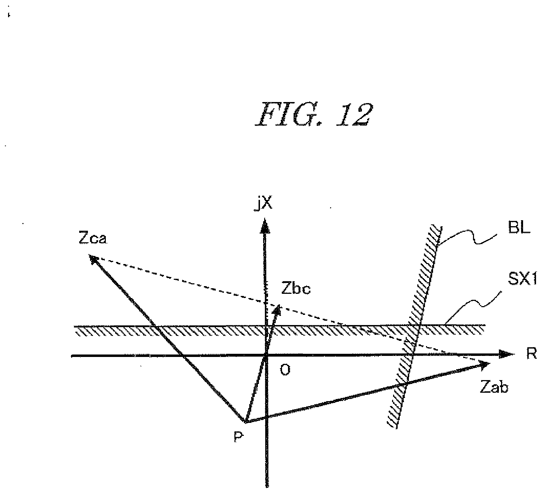

In addition, a method as shown in Fig. 12 is also widely applied, which combines a first stage element SX1 with a blinder element BL to make a blinder operation zone. In Fig. 12, "O" is a relay set point, "P" is a power source, "R" is a resistance component, "jX" is a reactance component, "Zbc" is an impedance value measured by the phase be as the fault phase, "Zab" is an impedance value measured by the phase ab as the advance phase and "Zea" is an impedance value measured by the phase ca as the delayed phase (See Non-Patent Document 2). With this method, the addition of the blinder element BL can limit overreach of the phase ab as the advance phase.

Further, a technique mentioned in Patent Document 1 prevents an unnecessary operation due to overreach by selecting as the fault phase the phase that has a minimum line-to-line voltage.

Non-Patent Document 1: Yoshihide Hase, Mishio Masui, "Protective relay technology Chapter 3" (pp. 252-254) Publishing Department of Tokyo Denki University, 1979 Non-Patent Document 2: " Electric technology research, volume 37, No.1, Back-up protective relaying system" (p. 41) Electric Technology Research Association, 1981 Patent Document 1: Japanese Patent Application Laid-open No. 2000-125462

Document US 6 459 960 B1 describes a short-circuit distance relay having a short-circuit distance relay element that calculates a fault impedance from voltage and current which are introduced from a power system and that compares the fault impedance with a set impedance and uses the fault impedance comparison result within its protection zone. It calculates the amplitudes of the phase-to-phase differences of these voltage amplitudes and a sensitivity constant Vk.

The countermeasures to overreach as mentioned above, can allow correct non-operation of the short-circuit distance relay in a normal phase except the fault phase, but have the following problems. First, the method shown in Fig. 11 using the operation condition of the over current relay, is required to set such that the operating sensitivity of the over current relay rises up to the level of constantly being in non-operation when a heavy load system.

As a result of rising the operating sensitivity of the over current relay, the operation detection sensitivity of the short-circuit distance relay goes down inevitably when a fault occurs, thereby it is difficult to distinguish between a fault current and a load current. In other words, when the operation condition of the over current relay is used in combination with a short-circuit distance relay element, the detection sensitivity of fault current in the short-circuit distance relay depends on the magnitude of the load current. This means that the fault detection accuracy of the short-circuit distance relay depends on the magnitude of the load current. This matter is undesirable for stabilizing the accuracy.

In addition, in the countermeasure to overreach shown in Fig. 12 using a blinder element, in relation to setting of a blinder element for preventing overreach when a fault occurs and setting values for avoiding load impedance, there is a trouble that it is difficult to cause the both to cooperate in operating aspect. In particular, when taking account of resistance of the fault point in a short distance line, it is very difficult to set such that the setting can cope with both the prevention of overreach and the avoidance of load impedance. Therefore, there is a problem of selecting optimum setting values in the blinder element.

In addition, in the technique mentioned in Patent Document 1, as the fault phase, the phase that has a minimum line-to-line voltage, is selected. However, when assuming that multiple faults occur over two circuits in a transmission line with two circuits, there is some possibility that a direction element of the short-circuit distance relay will be in non-operation. In other words, when multiple faults occur, if the fault voltage corresponds to that of ground fault between three wires, the voltage of each phase is approximately equal to each other. As a result, since there is little or no difference between the magnitudes of the line-to-line voltages, there is some possibility that a direction element for determining the fault direction will be in non-operation.

In such a case, it is impossible to output an operation judgment by the first element in the distance elements of the fault phase or the phase related to the fault phase. As a result, there is some possibility that a time limit interruption is judged by the second stage element to result in a situation of delaying in fault clearance. Consequently, it is necessary to carefully detect multiple faults, and this has made the fault detection process complex so far.

As mentioned above, when using the operation condition of the over current relay or a blinder element for preventing overreach of the other phases except the fault phase, this method depends on the power system inevitably. In other words, the setting has to be made with fully aware of the power system conditions, and it is necessary to take account of a special setting when operating a short-circuit distance relay. In addition, since in the conventional techniques there is some possibility of non-operation when multiple faults occur, improvement is desired.

This invention has been proposed under the circumstances mentioned above. This invention has as an object the provision of a short-circuit distance relay which has a high accuracy and an excellent reliability such that the relay can prevent misjudgment and unnecessary operation due to overreach without depending on the power system conditions, and can operate even if multiple faults occur, by allowing the determination of the fault phase based on impedance values measured by each phase when a short circuit or a ground fault occurs between two wires.

SUMMARY

In order to attain the above object, a digital short-circuit distance relay is disclosed according to claim 1.

The short-circuit distance relay according to this invention, has: an impedance calculation part which calculates an impedance value of the phase in which the direction element has operated; and a minimum phase selection part which selects as a fault phase, the phase that has a minimum impedance value calculated by the impedance calculation part, wherein using an output regarding the fault phase selected by the minimum phase selection part, when the impedance value of the fault phase is equal to or less than the setting impedance value of one of the distance element of the fault phase, an output of the distance element of the fault phase is allowed to be valid to output an opening command to a circuit breaker.

As a well known fact, impedances measured by the advance phase and the delayed phase both are directed to directions of 60 degrees from the impedance measured by the fault phase in relation to the power source point. Therefore, when the phase having a minimum impedance value is selected as the fault phase out of the phases in which the direction element has operated, the magnitude of the impedance measured by the fault phase is equal to or less than 1/2 of the impedance measured by the other phases except the fault phase.

When a short circuit fault or a ground fault occurs between two wires, the impedance value of overreach in the advance phase is equal to or more than twice of the value of the fault phase (approximately twice when the power source impedance is zero). So when the phase having a minimum impedance value is selected as the fault phase out of the phases in which the direction element has operated, this means that the phase having an impedance value equal to or less than 1/2 of the value of the other phases is judged the fault phase, thereby allowing the prevention of misjudgment due to advance phase overreach. In other words, this short-circuit distance relay can surely prevent misjudgment and unnecessary operation due to overreach, and can enhance the accuracy of the short-circuit distance relay.

In addition, since this short-circuit distance relay judges the fault phase based on the impedance measured by each phase, the current of each phase is included in the elements used for judgment, unlike the conventional method of focusing on line-to-line voltage and selecting as the fault phase the phase having a minimum line-to-line voltage. Therefore, even if multiple faults that have occurred corresponds to ground fault between three wires, in which the voltage of each phase is equal to each other, the magnitude of impedances can be determined on the basis of currents, to allow the appropriate selection of the fault. As a result, there is no possibility of non-operation even if multiple faults occur, and a prompt clearance of the faults can be performed.

With this invention as mentioned above, as a result of focusing on the impedance measured by each phase when a short circuit or a ground fault occurs between two wires, and calculating the impedance value of the phase in which a direction element has operated, it is possible to select as the fault phase the phase having a minimum impedance value. Consequently, a short-circuit distance relay can be provided which has a high accuracy and an excellent reliability such that the relay can prevent misjudgment and unnecessary operation due to overreach without depending on the power system conditions, and without taking account of a special setting when operating the relay, and can operate even if multiple faults occur.

## BRIEF DESCRIPTION OF THE DRAWINGS

Fig. 1 is a function block diagram showing a first embodiment according to this invention;
Figs. 2(a) and 2(b) both are views showing a characteristic example of short-circuit distance relay;
Fig. 3(a) is a system diagram, and Fig. 3(b) is a view showing an example of the setting and measurement of impedance measured by each phase when a short circuit fault occurs between two front wires;
Figs. 4(a) and 4(b) show an example when multiple faults occur in a parallel two circuit power transmission line, and Fig. 4(a) is a system diagram and Fig. 4(b) is a current and voltage vector illustration;
Figs 5(a) and 5(b) show an example when multiple faults occur in a parallel two circuit power transmission line, and Fig. 5(a) is a system diagram and Fig. 5(b) is a current and voltage vector illustration;
Fig. 6 is a function block diagram showing a second embodiment according to this invention;
Fig. 7 is a function block diagram showing a first example not being part of the invention.
Fig. 8 is a function block diagram showing a fourth embodiment according to this invention;
Fig. 9 is a function block diagram showing a fifth embodiment according to this invention;
Fig. 10 is a function block diagram showing a sixth embodiment according to this invention;
Fig. 11 is an illustration showing a countermeasure to an overreach using an over current relay; and
Fig. 12 is an illustration showing a countermeasure to an overreach using a blinder element.

## EXPLANATION OF REFERENCE NUMERALS

11 ... impedance calculation part
12 ... minimum phase selection part
13 ... AND circuit

14 ... NOT circuit

15 ... display device

16 ... resistance component computing part

17 ... minimum resistance phase selection part

18 ... three phase AND circuit

19 ... three phase NOT circuit

20 ... three phase fault judgment circuit

100, 100A ... fault phase selection circuit

101, 201, 202 ... output

200 ... first stage element circuit

## DETAILED DESCRIPTION

{First embodiment}

{Configuration}

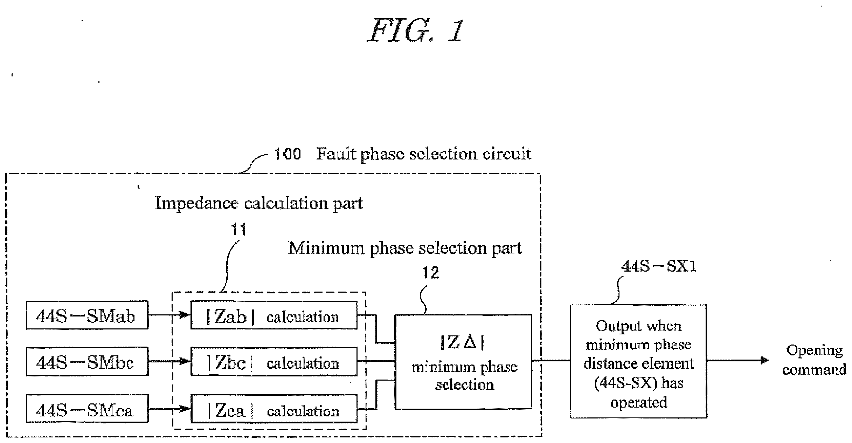

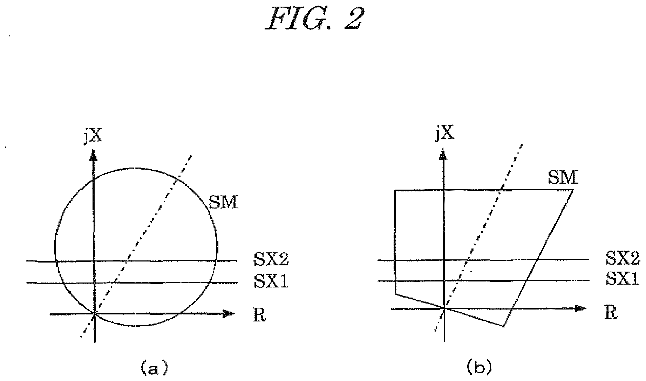

Below, an example according to this invention will be explained in detail referring to the drawings. Fig. 1 is a function block diagram showing a first embodiment of short-circuit distance relay according to this invention, and Figs. 2(a) and 2(b) both are views showing a characteristic example of short-circuit distance relay.

In Fig. 1, "44S-SMab", "44S-SMbc" and "44S-SMca", are direction elements SM of a short-circuit distance relay element 44S. Each direction element SM, as shown in Figs. 2(a) and 2(b), has an operation range surrounded by a mho characteristic curve (shown in Fig. 2(a)), or a linear characteristic curve (shown in Fig. 2(b)).

As shown in Figs. 2(a) and 2(b), the short-circuit distance relay element 44S has distance elements SX which judges an electrical distance from a relaying point to a fault point using a reactance, and includes a first stage element SX1, a second stage element SX2, and the like. These distance elements identify the fault point. In general, the first stage element SX1 is set at the level of about 80% of the electrical distance up to the opposite bus, and the second stage element SX2 is set at the level of about 120% of the electrical distance up to the opposite bus. In addition, the distance element SX outputs an opening command to a circuit breaker on the condition that any of the direction elements SM has operated.

The first embodiment has the following features. First, as shown in Fig. 1, an impedance calculation part 11 which calculates an impedance value and a minimum phase selection part 12 which selects a phase that has a minimum impedance value, are provided. These impedance calculation part 11 and minimum phase selection part 12 configure a fault phase selection circuit 100 along with the direction elements 44S-SMab, 44S-SMbc and 44S-SMca of the short-circuit distance relay element 44S. The impedance calculation part 11, when any of the direction elements 44S-SMab, 44S-SMbc and 44S-SMca has operated, calculates impedance values Zab, Zbc and Zca measured by the operating phase. Specifically, the impedance values are calculated by the following expression (1)

$$ Zab = \frac{Vab}{Ia - Ib} \ , \qquad Zbc = \frac{Vbc}{Ib - Ic} \ , \qquad Zca = \frac{Vca}{Ic - Ia} \qquad \cdots (1) $$

The minimum phase selection part 12 is adapted for selecting a phase that has minimum impedance value out of the impedance values obtained by the impedance calculation part 11. A signal regarding the selected minimum phase comes to be an output 101 from the fault phase selection circuit 100. In addition, the first stage element SX1 is adapted for output an opening command to a circuit breaker when the impedance value of the minimum phase selected by the minimum phase selection part 12 is equal to or less than a setting impedance and within the operation area of the first stage element SX1.

{Countermeasure to overreach}

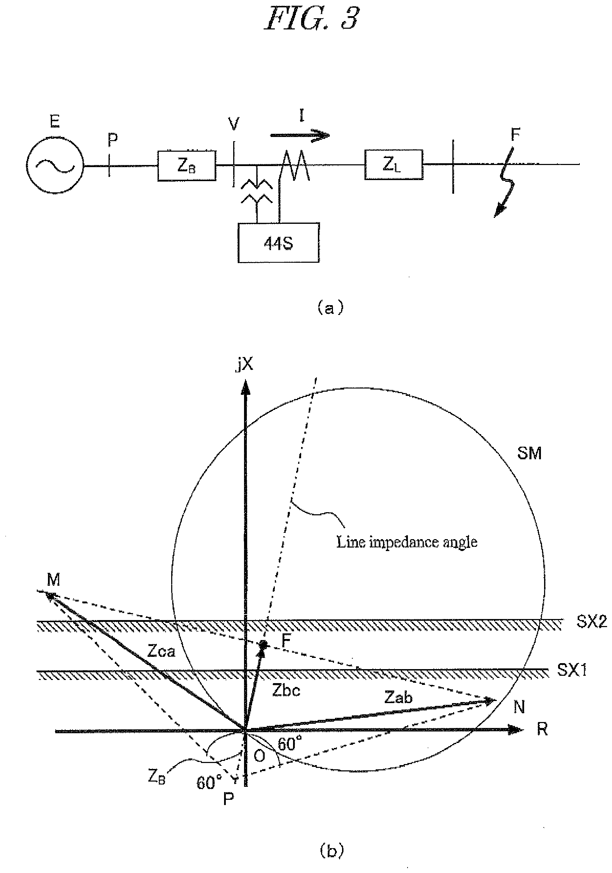

Next, referring to Figs. 3(a) and 3(b), a countermeasure to overreach in the first embodiment will be explained. Fig. 3(a) is a system diagram illustrating impedance measured by the short-circuit distance relay, and Fig. 3(b) is a view showing an example of the setting of the direction element SM and the first stage element SXI and the second stage element SX2 of the short-circuit distance relay element 44S, and impedance values measured by each phase when a short circuit fault occurs between two front wires. Each impedance value can be calculated by the expression (1) mentioned above.

In the example shown in Fig. 3(b), the impedance value Zbc is included within the operation area of the direction element SM and within the operation range of the second stage element SX2. In addition, the impedance value Zca measured by the delayed phase ca is outside the operation area of the direction element SM and the distance element SX.

On the other hand, the impedance value Zab measured by the advance phase ab is within the operation area of the direction element SM and within the operation range of the first stage element SX1. In other words, when a short circuit fault occurs between two front wires, although the impedance value Zab measured by the advance phase ab should be within the operation range of the second stage element SX2, the impedance value Zab is within the operation range of the first stage element SX1. This leads to the misjudgment of the first stage element SX1 due to overreach, resulting in an instantaneous interruption.

However, in the first embodiment, out of the phases in which the direction element SM has operated, the minimum phase having a minimum impedance value is selected as a fault phase. As a result, the magnitude |Zbc| of the impedance measured by the fault phase bc is equal to or less than 1/2 of the magnitudes |Zab| and |Zca| of the impedance measured by the advance phase ab and the delayed phase ca both are directed to directions of 60 degrees from the impedance measured by the fault phase be in relation to the power source point.

As mentioned above, when a short circuit fault or a ground fault occurs between two wires, the impedance value of overreach in the advance phase is equal to or more than twice of the value of the fault phase. So when the phase having a minimum impedance value is selected as the fault phase out of the phases in which the direction element has operated, this means that the phase having an impedance value equal to or less than 1/2 of the value of the other phases is judged the fault phase, thereby allowing the prevention of misjudgment due to advance phase overreach. Consequently, this short-circuit distance relay can surely prevent misjudgment and unnecessary operation due to overreach.

{Operations when multiple faults occur}

Next, operations of this embodiment when multiple faults occur will be explained. When multiple faults occur both inside and outside, and when a ground fault occurs between two front wires or at a single back wire, the impedance value of the front phase is minimum. Therefore, it is possible to select a minimum impedance phase when multiple faults occur.

Further, when a run after fault occurs, since the phase of a polarizing quantity changes, it seems that the impedance value calculated by the distance element also changes. However, handling as a fault phase a minimum impedance phase out of the phases that have operated in the internal direction, without causing any trouble, allows performance of an appropriate countermeasure to overreach.

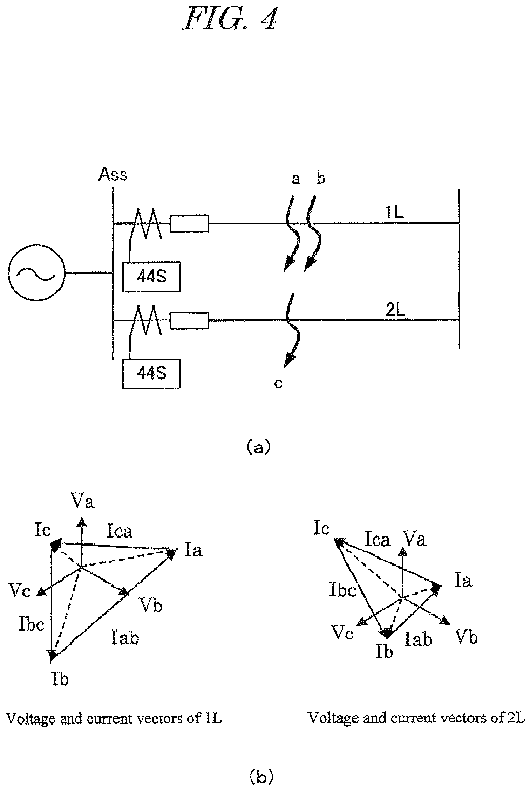

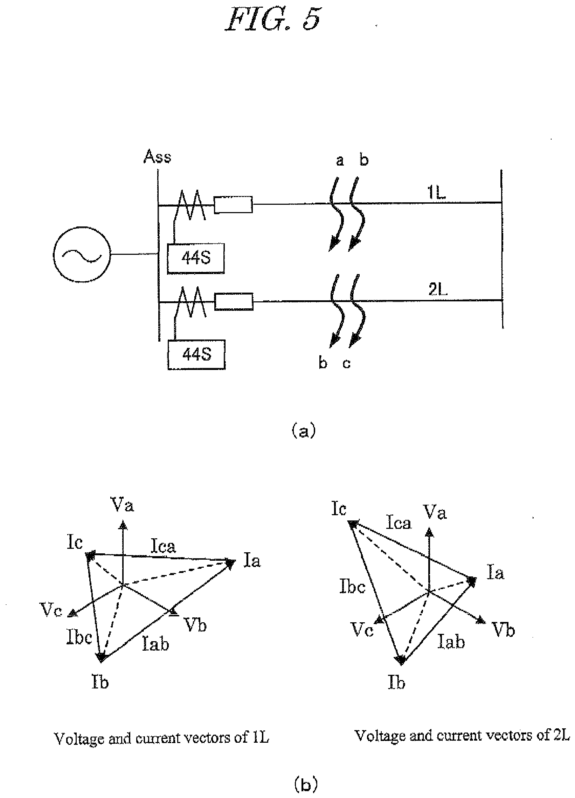

Fig. 4 and Fig. 5 show an example when multiple faults occur in a parallel two circuit power transmission line, and Fig. 4(a) and Fig. 5(a) on the left side of the view are system diagrams and Fig. 4(b) and Fig. 5(b) on the right side are current and voltage vector illustrations. In the current and voltage vector illustration of the Figs. 4(b) and 5(b). the symbols "Iab", "Ibc" and "Ica" denote "Iab=Ia-Ib", "Ibc=Ib-Ic" and "Ica=Ic-Ia", respectively.

Fig. 4 shows current and voltage vectors at the protective relay set point Ass when multiple faults occur at a middle point on each circuit line, more specifically, when a ground fault of phase ab occurs between two wires on the side of the first circuit line 1L and when a ground fault of phase c occurs in a single wire on the side of the second circuit line 2L. In the multiple faults of Fig. 4, the voltage at the protective relay set point Ass corresponds to that of ground fault between three wires, and each phase shows the same voltage. In addition, the current at the protective relay set point Ass shows on the assumption that the opposite terminal is non-power source and the current corresponds to the impedance to the fault point of each circuit line 1L and 2L.

In this situation, the magnitudes of impedance measured by the short-circuit distance relay element 44S in each of the circuit lines 1L and 2L, is expressed by the following expression (2).

$$|Zab| = \frac{|Vab|}{|Ia - Ib|}, \quad |Zbc| = \frac{|Vbc|}{|Ib - Ic|}, \quad |Zca| = \frac{|Vca|}{|Ic - Ia|} \quad \cdots (2)$$

Here, since the voltages at the protective relay set point Ass is equal to each other, and |Vab|=|Vbc|=|Vca|, the magnitude of impedance values |Zab|, |Zbc| and |Zca| are determined by the magnitude of current vslues |Iab|, |Ibc| and |Ica|, if the current becomes larger, the impedance becomes smaller.

Regarding the magnitude of current of each phase, as shown in the vector illustration of Fig. 4(b), Iab is maximum on the side 1L, and Ibc or Ica is maximum on the side 2L. Consequently, the impedance value |Zab| measured by the phase ab is minimum on the side 1L, and the impedance value |Zbc| measured by the phase bc or the impedance value |Zca| measured by the phase ca is minimum on the side 2L.

As clearly known by the vector illustration of Fig. 4(b), the phase difference of voltage and current is the level of about from 60 degrees to 90 degrees in current delay. Therefore, each impedance angle is directed to the direction of the line impedance angle shown in a dashed and doted line in Fig. 3, the direction element SM operates in all of the phases.

As a result, among the impedances of the phases in which the direction element SM has operated, the impedance |Zab| is minimum measured by the phase ab on the side 1L, and the minimum phase selection part 12 selects the phase ab on the side 1L. On the other hand, the impedance value |Zbc| measured by the phase bc or the impedance value |Zca| measured by the phase ca is minimum on the side 2L.

Here, the minimum phase selection part 12 selects any of these phases, that is, the phase bc or the phase ca, on the side 2L. In addition, the first stage element SX1 outputs an opening command to a circuit breaker if the impedance of the minimum phase selected by the minimum phase selection part 12 is equal to or less than the setting impedance and within the operation range of the first stage element SX1,

As mentioned above, even if multiple faults occur in a parallel two circuit power transmission line, the direction element SM of the fault phase ab itself operates on the side of the first circuit line 1L, and the direction element SM of the phase related to the fault phase c, that is, the phase be or ca, can surely operate on the side of the second circuit line 2L. Note that, if the fault point is far away from the middle point on the side 2L, the first stage element can be in non-operation depending on the magnitude of current.

Fig. 5, in which the fault point is a middle point, shows voltage and current vectors at the protective relay set point Ass when a ground fault of phase ab occurs between two wires on the side of the first circuit line 1L and when a ground fault of phase bc occurs between two wires on the side of the second circuit line 2L. In other words, in Fig. 5, a ground fault between two wires occurs as multiple faults in both of the circuit lines in the parallel two circuit power transmission line, and as with Fig. 4, the direction element SM operates in all of the phases.

As shown in the vector illustration of Fig. 5, the magnitude of current of each phase, on the first circuit line 1L, has a relationship of |Ia-Ib|>|Ib-Ic|, |Ia-Ib|>|Ic-Ia|. When the voltage of each phase is equal to each other, if the current is larger, the impedance is smaller, as a result, the impedance |Zab| measured by the phase ab is minimum on the circuit line 1L. Consequently, the minimum phase selection part 12 selects the phase ab on the side 1L.

On the other hand, on the second circuit line 2L, the magnitude of current of each phase has a relationship of |Ib-Ic|>|Ia-Ib|, |Ib-Ic|>|Ic-Ia|. The impedance |Zbc| measured by the phase bc is minimum on the circuit line 2L. In other words, the minimum phase selection part 12 selects the phase be on the side 2L.

In addition, the first stage element SX1 outputs an opening command to a circuit breaker when the impedance of the minimum phase selected by the minimum phase selection part 12 is equal to or less than the setting impedance and within the operation range of the first stage element SX1. In other words, as shown in Fig. 5, even if a ground fault between two wires occurs as multiple faults in both of the circuit lines in the parallel two circuit power transmission line, depending on the fault phases ab and bc occurring in the circuit line, the distance element SX can surely operate to output an opening command to a circuit breaker.

As mentioned above, in the first embodiment, even if multiple faults occur, the distance element of the fault phase or the phase related to the fault phase can operate appropriately, to allowing the correct output of an opening command. Note that it is important to calculate the impedance value of the phase in which the direction element SM has operated, and determine the minimum impedance phase and any method may be used for determining the minimum phase.

For example, the minimum impedance phase can be selected by the following comparison.

(1) If |Zab|-|Zbc|>0 and |Zbc|-|Zca|<0, then phase bc is minimum phase;
(2) If |Zab|-|Zbc|>0 and |Zbc|-|Zca|>0, then phase ca is minimum phase;
(3) If |Zab|-|Zbc|<0 and |Zab|-|Zca|<0, then phase ab is minimum phase;
(4) If |Zab|-|Zbc|<0 and |Zab|-|Zca|>0, then phase ca is minimum phase;
(5) If |Zab|-|Zca|>0 and |Zbc|-|Zca|<0, then phase bc is minimum phase;
(6) If |Zab|-|Zca|<0 and |Zab|-|Zca|>0, then phase ab is minimum phase.

{Advantageous effects}

As mentioned above, with the first embodiment, misjudgment and unnecessary operation due to overreach can be surely prevented by calculating the impedance the phase in which the direction element has operated by the impedance calculation part 11 and by selecting as a fault phase a minimum impedance phase by the minimum phase selection part 12. Moreover, this method does not depend on the power system, different from the conventional countermeasures to overreach using the operation conditions of over current relay and a blinder element. Therefore, it is unnecessary to make a special setting when operating the relay, and an excellent reliability can be obtained.

In addition, with the first embodiment in which a minimum impedance phase is focused on and selected as a fault phase, since a current is also included in the elements used for judgment in comparison with the conventional method which selects a minimum voltage phase as a fault phase, the reliability of judgment can be more enhanced. Therefore, there is no possibility of non-operation even if multiple faults occur, and an excellent reliability can be obtained.

Note that in the first embodiment, a method has been explained which calculates an impedance value of the phase in which the direction element SM has operated, but another method may be used which calculates all impedance values of the three phases when a fault occurs, selects the impedance values of the phases in which the direction element SM has operated, and further selects the phase that has a minimum impedance value among the selected impedance values, this method also can provide the same actions and effects as that of the former method. In addition, in the first embodiment, the first stage element as a distance element directly outputs an opening command as a valid output from the distance element, not limited to this, another method may be used in which an output from the distance element is allowed to be valid, and the valid output of the distance element indirectly outputs an opening command. As a method of judgment as to whether the impedance of a minimum impedance phase is within the operation range of the distance element, a method may be used which is the same as the operation judgment of the distance element in the conventional distance relay, as well known, so the explanation is omitted here.

(Second embodiment)

(Configuration)

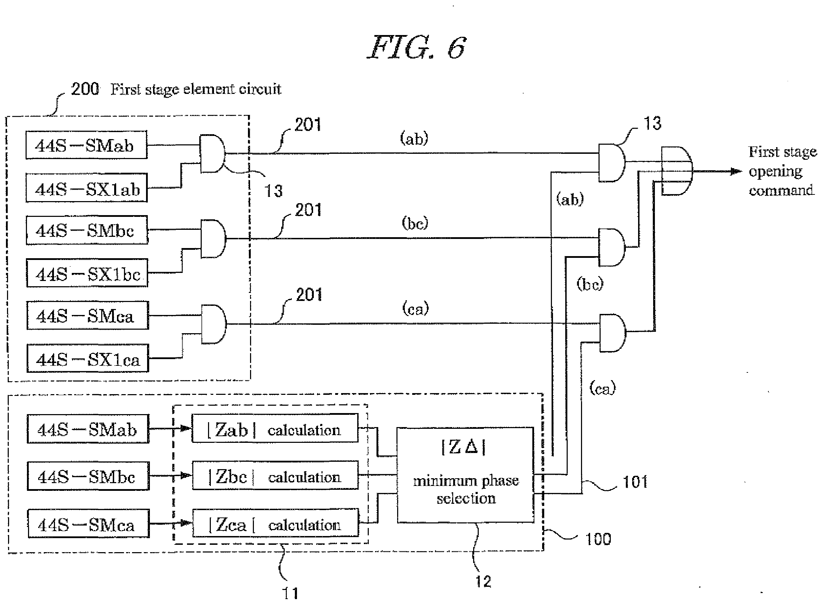

Next, a second embodiment will be explained referring to a function block diagram of Fig. 6. As shown in Fig. 6, the direction elements 44S-SMab, 44S-SMbc and 44S-SMca and first stage elements as distance elements SX1-ab, SX1-bc and SX1-ca configure a first stage element circuit 200 of an AND configuration using AND circuits 13, in which the logic is the same as that used in the conventional short-circuit distance relay. A symbol "201" denotes an output of the first stage element circuit 200.

The second embodiment has a feature in which outputs 101 of the fault phase selection circuit 100 are incorporated into the outputs 201 of the first stage element circuit 200 in an AND configuration using AND circuits 13 as shown in Fig. 6, and according to the selection result of the fault phase selection circuit 100, a judgment is made as to whether the output 201 of the first stage element SX1 of the first stage element circuit 200 is valid or invalid.

The fault phase selection circuit 100 is, as with the configuration of the first embodiment shown in Fig. 1, a circuit which has the direction elements 44S-SMab, 44S-SMbc and 44S-SMca, the impedance calculation part 11 which calculates an impedance value and the minimum phase selection part 12 which selects a phase that has a minimum impedance value.

Here, the fault phase selection circuit 100 is a circuit which determines a minimum impedance phase out cf the phases in which the direction element SM has operated, and adapted such that the output 101 regarding the minimum phase from the fault phase selection circuit 100 is any of the phase ab, the phase bc or the phase ca, and the output 101 allows, among the outputs 201 of the first stage element circuit 200, one output to be valid, which is output from the distance element SX of the same phase as the output 101.

Specifically, when the phase having a minimum impedance value is the phase ab out of the phases in which the direction element SM has operated, the minimum phase selection part 12 of the fault phase selection circuit 100 selects the phase ab, as a result, the output 101 allows the output 201 of the phase ab to be valid. Note that only the first stage elements SX1 are shown as the distance elements, but actually, the other elements such as second stage elements and third stage elements also provided as the distance elements.

{Actions and advantageous effects}

With the second embodiment mentioned above, the fault phase selection circuit 100 having the impedance calculation part 11 and the minimum phase selection part 12, calculates an impedance value of the phase in which the direction element SM has operated, and selects a minimum impedance phase as a fault phase. In addition, depending on the phase selected by the fault phase selection circuit 100, the output 201 of the selected phase of the first stage element circuit 200 is allowed to be valid.

As a result, it is possible to prevent the output of the distance element that has incorrectly operated due to an advance phase overreach, and to make use of the judgment of the distance element that has correctly operated. Moreover, in the second embodiment, since the actions and effects mentioned above can be obtained only by incorporating the fault phase selection circuit 100 into the existing short-circuit distance relay, it is possible to enhance the reliability with low cost.

(first example not being part of the invention)

{Configuration}

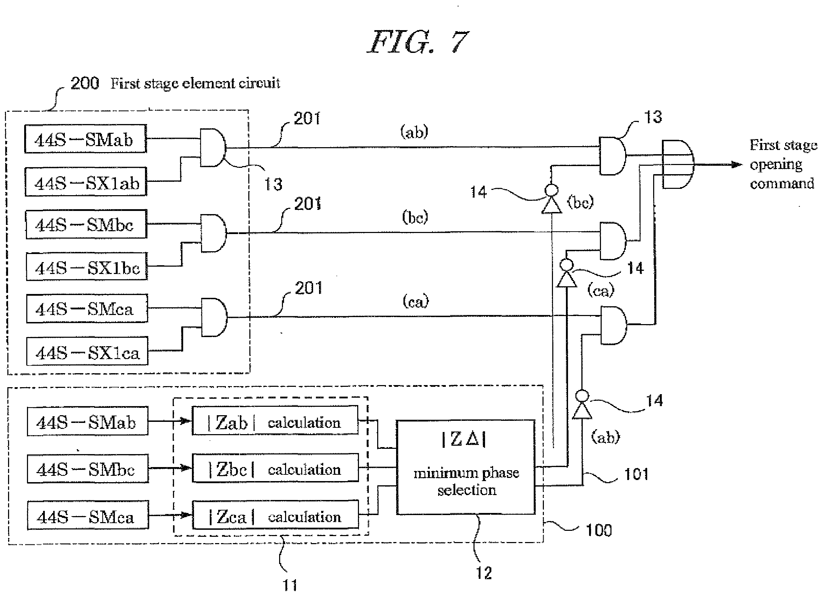

Next, a first example will be explained referring to a function block diagram of Fig. 7. In the third embodiment, the AND configuration of the outputs 201 of the first stage element circuit 200 and the outputs 101 of the fault phase selection circuit 100, is the same as that shown in Fig. 6.

The first example has a feature in which using an output regarding a selected fault phase, an output of the distance element of the advance phase in relation to the fault phase is prevented. Specifically, a NOT circuit 14 of the advance phase is provided to the outputs 101 of the fault phase selection circuit 100.

With this circuit configuration, for example, when among the phases in which the direction element SM has operated, the phase bc is a minimum impedance phase, the fault phase selection circuit 100 selects the phase bc, and the NOT circuit 14 acts in such a way as to prevent output of the distance element of the advance phase ab in relation to the phase be. In addition, when the fault phase selection circuit 100 selects the phase ca as the minimum impedance phase, the NOT circuit 14 acts in such a way as to prevent output of the distance element of the advance phase be in relation to the phase ca.

{Actions and advantageous effects}

As mentioned above referring to Fig. 3, it is known that a short-circuit distance relay of the advance phase in relation to a fault phase tends to overreach. with the third embodiment, when the fault phase selection circuit 100 has selected a minimum impedance phase out of the phases in which the direction element SM has operated, an output of the distance element SX of the advance phase in relation to the fault phase can be prevented in terms of circuit using the NOT circuit 14. As a result, a more positive countermeasure to advance phase overreach can be taken.

{Fourth embodiment}

{Configuration}

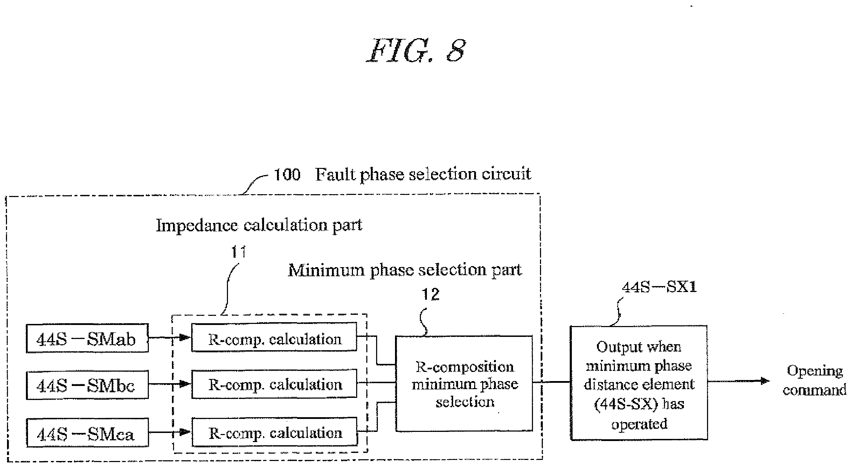

Further, a fourth embodiment will be explained referring to Fig. 8. The fourth embodiment has a feature in which in place of the impedance calculation part 11 and the minimum phase selection part 12 of the first embodiment, a resistance component computing part 16 which calculates a resistance component (R-component) of impedance, and a minimum resistance phase selection part 17 which selects a phase that has a minimum value of the resistance component (R-component) calculated by the resistance component computing part 16, are used to configure a fault phase selection circuit 100A.

The resistance component computing part 16, when any of the direction elements 44S-SMab, 44S-SMbc and 44S-SMca has operated, calculates a resistance component (R-component) of impedance measured by the operation phase. Here, when a symbol "θ" denotes the phase difference between voltage V and current I, the R-component can be calculated by the following expression (3).

$$Z = \frac{V}{I} \quad , \qquad R = |Z| \cdot \cos\theta \qquad \qquad \cdots (3)$$

{Actions and advantageous effects}

Among the impedances measured by a short-circuit distance relay, the impedance measured by the advance phase or the delayed phase includes a larger resistance component (R-component) than that of the fault phase (See Fig. 3). A method according to the fourth embodiment, includes focusing on the resistance component (R-component) of impedance, and selecting the phase that has a minimum resistance component (R-component) as a fault phase. As a result of using this method, actions and effects can be obtained which are the same as those of the method in which a minimum impedance phase is selected. Consequently, it is possible to prevent misjudgment and unnecessary operation due to overreach without depending on the power system conditions.

Note that when the resistance component (R-component) is calculated, various methods can be selected appropriately. This embodiment is essentially to select the phase that has a minimum resistance component (R-component), and to allow an output of the distance element of the selected phase to be valid. Consequently, another method may be used which calculates all values of resistance component (R-component) of the three phases when a fault occurs, selects the resistance component values (R-component) of the phases in which the direction element has operated, and further selects the phase having a minimum resistance value among the selected resistance component values.

{Fifth embodiment}

{Configuration}

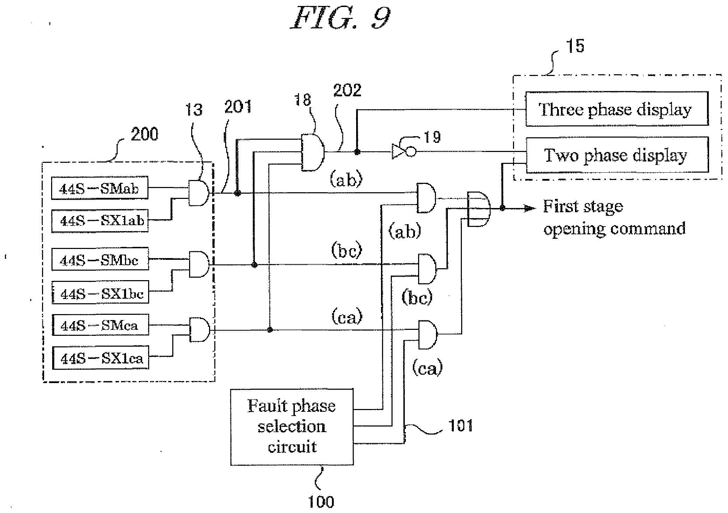

Next, a fifth embodiment will be explained referring to Fig. 9. The fifth embodiment relates to a short-circuit relay that has a display device which displays a phase name of a phase when a short circuit fault occurs in the phase. The fifth embodiment has a feature in which a two-phase short circuit fault and a three-phase short circuit fault can be correctly displayed in such a way as to correspond to the actual conditions of the fault. It is very effective to apply the display method to the relay which has an excellent reliability in operation when multiple faults have occurred.

In Fig. 9, the first stage element circuit 200 and the fault phase selection circuit 100 are the same as those of the second embodiment shown in Fig. 6. In Fig. 9, a symbol "15" denotes a display device which displays a phase name of a fault phase, a symbol "18" denotes a three phase AND circuit which takes an AND operation of the three phases, and a symbol "19" denotes a three phase NOT circuit which shows that it is not of the three phases. In addition, in Fig. 9, a symbol "202" is an output of the three phase AND circuit 18.

In other words, with the fifth embodiment, in which the three phase AND circuit 18 and the three phase NOT circuit 19 are added to the configuration of the second embodiment shown in Fig. 6, when there are two phases or less in which the direction element SM has operated, the display device 15 displays the phase selected by the fault phase selection circuit 100, as a two-phase short circuit fault, and when there are three phases in which the direction element SM has operated and the distance elements SX of the three phases operate all together, the display device displays the selected three fault phases abc as a three-phase short circuit fault.

{Actions and advantageous effects}

In conventional methods, when there is a display device 15 for display of short-circuit fault, in general, the phase that has output an opening command to a circuit breaker, is selected as a fault phase. However, in such a method, when the fault phase has been selected and an opening command has been output, only two-phase short circuit fault is displayed even if the fault is actually a three-phase short circuit fault.

Therefore, with the fifth embodiment, a three phase AND operation is performed to outputs 201 of the first stage element circuit 200 which is an AND output of the direction elements SM and the first stage elements SX1, and then a NOT operation is performed to an output 202 of the three phase AND operation. As a result, short circuit faults can be classified into two-phase short circuit fault and three-phase short circuit fault, and the display device 15 can display two-phase short circuit fault and three-phase short circuit fault, separately.

With the fifth embodiment, the problem of inconvenient display in which a short circuit fault is displayed as a two-phase short circuit fault even if the fault is actually a three-phase short circuit fault, can be solved. Moreover, with this embodiment, as a result of using the fault phase selection circuit 100 to which a reliable operation is ensured even if multiple faults occur, the fault judgment can be made with high reliability, and it is possible to accurately inform an operator of two-phase short circuit fault and three-phase short circuit fault.

{Sixth embodiment}

{Configuration}

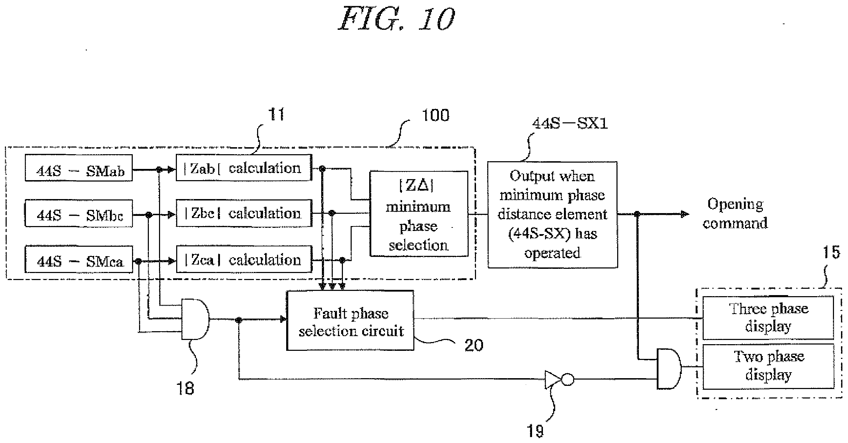

Next, a sixth embodiment will be explained referring to Fig. 10. In Fig. 10, the fault phase selection circuit 100, the display device 15, the three phase AND circuit 18 and the three phase NOT circuit 19 are the same as those of the fifth embodiment shown in Fig. 9.

The sixth embodiment, as with the fifth embodiment, relates to a short-circuit relay that has a display device which displays a phase name of a phase when a short circuit fault occurs in the phase, and has a feature in which a dedicated three phase fault judgment circuit 20 is provided for judgment of three phase fault. When the three phase AND circuit 18 has output conditions of three phase operation, the three phase fault judgment circuit 20 takes in the impedance of each phase from the impedance calculation part 11 included the fault phase selection circuit 100, and judges a three phase fault. Here, when making a three phase judgment, various methods can be selected appropriately,

For example, as shown in the following expression (4), a method can be used which includes multiplying the total impedance value of individual phase impedances by a coefficient, making a comparison mentioned below, and judging a three phase short-circuit fault when all of the difference between the impedances of three phases are equal to or less than a predetermined value.

$$k_1 \cdot Zs < |Zab| < k_2 \cdot Zs$$
$$k_1 \cdot Zs < |Zbc| < k_2 \cdot Zs \qquad \cdots (4)$$
$$k_1 \cdot Zs < |Zca| < k_2 \cdot Zs$$

Here, $Zs = |Zab| + |Zbc| + |Zca|$
$k_1$, $k_2$: constants

{Actions and advantageous effects}

With the sixth embodiment, in addition to the actions and effects the same as the fifth embodiment can be obtained, since the three phase fault judgment circuit 20 is provided, the reliability of judgment operation of three phase short-circuit fault can be more enhanced.

A short-circuit distance relay according to this invention, is not limited to the embodiments mentioned above, but may include various modifications, in which each element can be set appropriately, and a combination of two or more embodiments selected from the embodiment mentioned above. For example, the fault phase selection circuit 100A of the fourth embodiment also can be adopted as the fault phase selection circuit 100 of the second and the first example.

**Claims**

1.　A digital short-circuit distance relay that is used for a three-phase AC power system comprising:

　　a direction element for receiving a voltage and a current from each phase of the three-phase AC power system, and identifying a direction of a fault based on the input voltage and input current; and
　　a short-circuit distance relay element for identifying a fault point by calculating for each phase an impedance value from the voltage and the current, comparing the impedance with a setting impedance value of a distance element, and judging an electrical distance from a relaying point to the fault point based on a compared result, the digital short-circuit distance relay further comprising:

　　　　an impedance calculation part (11) for calculating an impedance value of at least one phase in which the direction element has identified; and
　　　　a minimum phase selection part (12) for selecting, as a fault phase, the phase that has a minimum impedance value calculated by the impedance calculation part (11),
　　　　wherein the short circuit distance relay element includes a plurality of stage elements; and
　　　　wherein an output from the minimum phase selection part regarding the fault phase selected by the minimum phase selection part (12), when the impedance value of the fault phase is equal to or less than the setting impedance value of the distance element of the fault phase, is configured to allow an output of the distance element of the fault phase to be valid to output the opening command to a circuit breaker.

2.　A digital short-circuit distance relay according to claim 1, wherein a further output from the minimum phase selection part regarding the fault phase selected by the minimum phase selection part (12), is configured to prevent an output of a distance element of the advance phase in relation to the fault phase.

3.　The digital short-circuit distance relay according to any of claims 1 to 2, wherein the impedance calculation part, when the direction element has identified the phase, is configured to calculate a resistance component of impedance of the identified phase.

4.　The digital short-circuit distance relay according to any of claims 1 to 3, wherein the impedance calculation part (11) is configured to calculate impedance values of each phase and is configured to select from the calculated impedance values an impedance value of the phase in which the direction element has operated to calculate an impedance value of the phase in which the direction element has operated.

5.　The digital short-circuit distance relay according to any of claims 1 to 3, further comprising a display device which displays a phase name of a phase when a short circuit fault occurs in the phase, wherein when there are two phases or less in which the direction element has operated, the display device displays the fault phase selected by the minimum phase selection part (12), as a two-phase short circuit fault, and when there are three phases in which the direction element has operated and the distance elements (SX) of the three phases operate all together, the display device displays the three fault phases selected by the minimum phase selection part (12), as a three-phase short circuit fault.

6. The digital short-circuit distance relay according to any of claims 1 to 3, further comprising a display device which displays a phase name of a phase when a short circuit fault occurs in the phase,
wherein when there are two phases or less in which the direction element has operated, the display device displays the fault phase selected by the minimum phase selection part (12), as a two-phase short circuit fault, and when there are three phases in which the direction element has operated and all of the difference between the impedances of three phases are equal to or less than a predetermined value, the display device displays the three fault phases selected by the minimum phase selection part (12), as a three-phase short circuit fault.

## Patentansprüche

1. Ein digitales Kurzschlussdistanzrelais, das für ein dreiphasiges Wechselstromsystem verwendet wird, umfassend:

ein Richtungselement zum Empfangen einer Spannung und eines Stroms aus dem Dreiphasen-Wechselstromsystem und zum Identifizieren einer Richtung eines Fehlers auf der Grundlage der Eingangsspannung und des Eingangsstroms; und
ein Kurzschlussdistanzrelaiselement zum Identifizieren eines Fehlerpunkts durch Berechnen für jede Phase eines Impedanzwerts aus der Spannung und dem Strom, Vergleichen der Impedanz mit einem Einstellimpedanzwert des Abstandselements und Beurteilen einer elektrischen Distanz von einem Relaispunkt zu dem Fehlerpunkt auf der Grundlage eines Vergleichsergebnisses,
das digitale Kurzschluss-Abstandsrelais ferner umfassend
einen Impedanzberechnungsteil (11) zum Berechnen eines Impedanzwertes von zumindest einer Phase, in der das Richtungselement identifiziert wurde; und
ein Minimum-Phasenauswahlteil (12) zum Auswählen der Phase, die einen durch das Impedanzberechnungsteil (11) berechneten minimalen Impedanzwert aufweist, als eine Fehlerphase,
wobei das Kurzschlussdistanzrelaiselement eine Vielzahl von Stufenelementen enthält; und
wobei ein Ausgang von dem Minimum-Phasenauswahlteil bezüglich der Fehlerphase, das von dem Minimalphasenauswahlteil (12) ausgewählt wird, wenn der Impedanzwert der Fehlerphase gleich oder kleiner als der Einstellimpedanzwert des Distanzelements der Fehlerphase ist, ausgebildet ist zum Zulassen eines gültigen Ausgangssignal des Distanzelements der Fehlerphase, um den Öffnungsbefehl an den Leistungsschalter auszugeben.

2. Ein digitales Kurzschluss-Abstandsrelais nach Anspruch 1,
wobei ein weiterer Ausgang von dem Minimum-Phasenauswahlteil bezüglich der durch den Mindestphasenauswahlteil (12) ausgewählten Fehlerphase konfiguriert ist einen Ausgang des Distanzelements der Vorlaufphase in Bezug auf die Fehlerphase zu verhindern.

3. Digitales Kurzschluss-Abstandsrelais nach einem der Ansprüche 1 bis 2, wobei der Impedanzberechnungsteil, wenn das Richtungselement die Phase identifiziert hat, konfiguriert ist eine Widerstandskomponente der Impedanz der identifizierten Phase zu berechnen.

4. Digitales Kurzschlussdistanzrelais nach einem der Ansprüche 1 bis 3, wobei der Impedanzberechnungsteil (11) konfiguriert ist Impedanzwerte jeder Phase zu berechnen und konfiguriert ist aus den berechneten Impedanzwerten einen Impedanzwert der Phase auszuwählen, in der das Richtungselement betrieben wurde, um einen Impedanzwert der Phase zu berechnen, in der das Richtungselement betrieben wurde.

5. Digitales Kurzschluss-Abstandsrelais nach einem der Ansprüche 1 bis 3, ferner mit einer Anzeigevorrichtung, die einen Phasennamen einer Phase anzeigt, wenn ein Kurzschlussfehler in der Phase auftritt,
wobei, wenn es zwei oder weniger Phasen gibt, in denen das Richtungselement betrieben wurde, die Anzeigevorrichtung die Fehlerphase, die durch das minimale Phasenauswahlteil (12) ausgewählt wurde, als einen zweiphasigen Kurzschlussfehler anzeigt, und wenn es drei Phasen gibt, in denen das Richtungselement betrieben wurde und die Distanzelemente (SX) der drei Phasen alle zusammen arbeiten, die Anzeigevorrichtung die drei Fehlerphasen, die durch das minimale Phasenauswahlteil (12) ausgewählt wurden, als einen dreiphasigen Kurzschlussfehler anzeigt.

6.  Digitales Kurzschluss-Abstandsrelais nach einem der Ansprüche 1 bis 3, ferner mit einer Anzeigevorrichtung, die einen Phasennamen einer Phase anzeigt, wenn ein Kurzschlussfehler in der Phase auftritt,
    wobei, wenn es zwei oder weniger Phasen gibt, in denen das Richtungselement betrieben wurde, die Anzeigevorrichtung die Fehlerphase, die durch den minimalen Phasenauswahlteil (12) ausgewählt wurde, als einen zweiphasigen Kurzschlussfehler anzeigt, und wenn es drei Phasen gibt, in denen das Richtungselement betrieben wurde und alle Differenzen zwischen den Impedanzen von drei Phasen gleich oder kleiner als ein vorbestimmter Wert sind, die Anzeigevorrichtung die drei Fehlerphasen, die durch den minimalen Phasenauswahlteil (12) ausgewählt wurden, als einen dreiphasigen Kurzschlussfehler anzeigt.

## Revendications

1.  Relais numérique de court-circuit à distance utilisé pour un système d'alimentation CA triphasé comprenant :

    un élément de direction pour recevoir une tension et un courant de chaque phase du système d'alimentation CA triphasé, et identifier une direction d'un défaut sur la base de la tension d'entrée et du courant d'entrée ; et
    un élément de relais de court-circuit à distance pour identifier un point de défaut en calculant pour chaque phase une valeur d'impédance à partir de la tension et du courant, en comparant l'impédance avec une valeur d'impédance de réglage d'un élément à distance, et en jugeant une distance électrique entre un point de relais et le point de défaut sur la base d'un résultat comparé,
    le relais numérique de court-circuit à distance comprenant en outre :

    une partie de calcul d'impédance (11) pour calculer une valeur d'impédance d'au moins une phase dans laquelle l'élément de direction a été identifié ; et
    une partie de sélection de phase minimum (12) pour sélectionner, en tant que phase de défaut, la phase qui présente une valeur d'impédance minimum calculée par la partie de calcul d'impédance (11),
    dans lequel l'élément de relais de court-circuit à distance inclut une pluralité d'éléments d'étage ; et
    dans lequel une sortie à partir de la partie de sélection de phase minimum concernant la phase de défaut sélectionnée par la partie de sélection de phase minimum (12), lorsque la valeur d'impédance de la phase de défaut est égale ou inférieure à la valeur d'impédance de réglage de l'élément à distance de la phase de défaut, est configurée pour permettre à une sortie de l'élément à distance de la phase de défaut d'être valide pour délivrer en sortie l'instruction d'ouverture à un disjoncteur.

2.  Relais numérique de court-circuit à distance selon la revendication 1,
    dans lequel une sortie supplémentaire de la partie de sélection de phase minimum concernant la phase de défaut sélectionnée par la partie de sélection de phase minimum (12) est configurée pour empêcher une sortie d'un élément à distance de la phase d'avance par rapport à la phase de défaut.

3.  Relais numérique de court-circuit à distance selon l'une quelconque des revendications 1 à 2,
    dans lequel la partie de calcul d'impédance, lorsque l'élément de direction a identifié la phase, est configurée pour calculer une composante de résistance d'impédance de la phase identifiée.

4.  Relais numérique de court-circuit à distance selon l'une quelconque des revendications 1 à 3, dans lequel la partie de calcul d'impédance (11) est configurée pour calculer des valeurs d'impédance de chaque phase et est configurée pour sélectionner parmi les valeurs d'impédance calculées une valeur d'impédance de la phase dans laquelle l'élément de direction a fonctionné pour calculer une valeur d'impédance de la phase dans laquelle l'élément de direction a fonctionné.

5.  Relais numérique de court-circuit à distance selon l'une quelconque des revendications 1 à 3, comprenant en outre un dispositif d'affichage qui affiche un nom de phase d'une phase lorsqu'un défaut de court-circuit se produit dans la phase,
    dans lequel lorsqu'il y a deux phases ou moins dans lesquelles l'élément de direction a fonctionné, le dispositif d'affichage affiche la phase de défaut sélectionnée par la partie de sélection de phase minimum (12), en tant que défaut de court-circuit biphasé, et lorsqu'il y a trois phases dans lesquelles l'élément de direction a fonctionné et les éléments à distance (SX) des trois phases fonctionnent tous ensemble, le dispositif d'affichage affiche les trois phases de défaut sélectionnées par la partie de sélection de phase minimum (12), en tant que défaut de court-circuit triphasé.

6. Relais numérique de court-circuit à distance selon l'une quelconque des revendications 1 à 3, comprenant en outre un dispositif d'affichage qui affiche un nom de phase d'une phase lorsqu'un défaut de court-circuit se produit dans la phase,

dans lequel lorsqu'il y a deux phases ou moins dans lesquelles l'élément de direction a fonctionné, le dispositif d'affichage affiche la phase de défaut sélectionnée par la partie de sélection de phase minimum (12), en tant que défaut de court-circuit biphasé, et lorsqu'il y a trois phases dans lequelles l'élément de direction a fonctionné et toutes les différences entre les impédances des trois phases sont égales ou inférieures à une valeur prédéterminée, le dispositif d'affichage affiche les trois phases de défaut sélectionnées par la partie de sélection de phase minimum (12), en tant que défaut de court-circuit triphasé.

*FIG. 1*

100 Fault phase selection circuit

Impedance calculation part

11

Minimum phase selection part

12

44S−SX1

| 44S−SMab | → | |Zab| calculation |
| 44S−SMbc | → | |Zbc| calculation |
| 44S−SMca | → | |Zca| calculation |

|ZΔ| minimum phase selection

Output when minimum phase distance element (44S-SX) has operated

Opening command

FIG. 2

# FIG. 3

(a)

(b)

# FIG. 4

(a)

Voltage and current vectors of 1L

Voltage and current vectors of 2L

(b)

# FIG. 5

(a)

Voltage and current vectors of 1L

Voltage and current vectors of 2L

(b)

# FIG. 6

200 First stage element circuit

| 44S—SMab |
| 44S—SX1ab |
→ (ab) 201 — 13 → (ab)

| 44S—SMbc |
| 44S—SX1bc |
→ (bc) 201 → (bc)

| 44S—SMca |
| 44S—SX1ca |
→ (ca) 201 → (ca)

13 → First stage opening command

| 44S—SMab | → | |Zab| calculation |
| 44S—SMbc | → | |Zbc| calculation |
| 44S—SMca | → | |Zca| calculation |

|ZΔ| minimum phase selection

101

100

11

12

EP 2 325 966 B1

# FIG. 7

**200** First stage element circuit

First stage opening command

| 44S−SMab | 44S−SX1ab | → 13 → (ab) → 13 |
| 44S−SMbc | 44S−SX1bc | → 201 → (bc) → 14 |
| 44S−SMca | 44S−SX1ca | → 201 → (ca) → 14 |

| 44S−SMab | → | |Zab| calculation |
| 44S−SMbc | → | |Zbc| calculation |
| 44S−SMca | → | |Zca| calculation |

|ZΔ| minimum phase selection

11   12   100   101

(ab)  (bc)  (ca)

EP 2 325 966 B1

# *FIG. 8*

100 Fault phase selection circuit

Impedance calculation part

11

Minimum phase selection part

12

44S—SX1

| 44S—SMab | → | R-comp. calculation |
| 44S—SMbc | → | R-comp. calculation |
| 44S—SMca | → | R-comp. calculation |

R-composition minimum phase selection

Output when minimum phase distance element (44S-SX) has operated

Opening command

## FIG. 9

EP 2 325 966 B1

## FIG. 10

EP 2 325 966 B1

# FIG. 11

| SX1 — ab |
| SM — ab |
| 51φ — a |

→ 44S  First stage (phase ab)

| SX1 — bc |
| SM — bc |
| 51φ — b |

→ 44S  First stage (phase bc)

| SX1 — ca |
| SM — ca |
| 51φ — c |

→ 44S  First stage (phase ca)

EP 2 325 966 B1

## FIG. 12

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2000125462 A

- US 6459960 B1

**Non-patent literature cited in the description**

- **YOSHIHIDE HASE ; MISHIO MASUI.** Protective relay technology Chapter 3. *Publishing Department of Tokyo Denki University,* 1979, 252-254

- Electric technology research, volume 37, No.1, Back-up protective relaying system. *Electric Technology Research Association,* 1981